# EUROPEAN PATENT APPLICATION

(11) **EP 4 746 004 A1**
(43) Date of publication of application: **20.05.2026**
(21) Application number: 24839473.6
(22) Date of filing: 21.06.2024
(51) Int. Cl.: H01F 6/06, C08G 61/08, C08L 65/00

(54) **POLYMERIZABLE COMPOSITION AND RESIN-IMPREGNATED SUPERCONDUCTING COIL**

(30) Priority: 10.07.2023 JP 2023113279
(71) Applicant: RIMTEC Corporation, Tokyo 100-0005 (JP); Inter-University Research Institute Corporation High Energy Accelerator Research Organization, Tsukuba-shi Ibaraki 305-0801 (JP)
(72) Inventor: TAKEUCHI, Masaki, Tokyo 100-0005 (JP); KIKUCHI, Akihiro, Tsukuba-shi, Ibaraki 305-0047 (JP); WANG, Xudong, Tsukuba-shi, Ibaraki 305-0801 (JP); NAKAMOTO, Tatsushi, Tsukuba-shi, Ibaraki 305-0801 (JP)
(74) Representative: Kraus & Lederer PartGmbB
(86) International application number: PCT/JP2024/022670
(87) International publication number: WO 2025/013577

(57) **Abstract**

Provided is a polymerizable composition for a resin-impregnated superconducting coil which has excellent impregnation properties and can provide a resin-impregnated superconducting coil having high durability under a high-dose environment (under a high-dose environment where the radiation dose per 100,000 hours is 1 MGy or more). Provided is a polymerizable composition for a resin-impregnated superconducting coil for use under a high-dose environment where the radiation dose per 100,000 hours is 1 MGy or more, the polymerizable composition comprising a norbornene-based monomer, rare earth element-containing particles, and a metathesis polymerization catalyst.

## Description

### TECHNICAL FIELD

The present invention relates to a polymerizable composition for a resin-impregnated superconducting coil for use under a high-dose environment where the radiation dose per 100,000 hours is 1 MGy or more, and a resin-impregnated superconducting coil prepared using such a polymerizable composition.

### BACKGROUND ART

Particle accelerators include a superconducting coil for generating a magnetic field, and the superconducting coil is usually used under a high-dose environment where the radiation dose per 100,000 hours or the radiation dose in the total operation period is 1 MGy or more. For this reason, when resin-impregnated superconducting coils prepared by impregnating superconducting coils with a resin are used under such a high-dose environment, the resin in the resin-impregnated superconducting coils requires durability under the high-dose environment.

On the other hand, resins are known to be degraded by a decomposition reaction or the like caused by irradiation with radiation. To address this, measures for suppressing degradation of resins caused by radiation have been examined.

For example, Non Patent Document 1 discloses the results of examinations performed on polyethylene, polypropylene, and polystyrene films or sheets containing a specific antioxidant for variations of additives, decomposed products of polymers and additives, monomers, and the like and for the changes in tensile strength, color tone, odor, and the like caused by irradiation with a γ-ray. Specifically, None Patent Document 1 discloses the results that when a polymer containing no antioxidant was irradiated with 50 kGy of a γ-ray in the maximum, volatile substances, which can be regarded as decomposition products of the polymer, were detected, and the tensile strength, color tone, odor, and the like were worsened; in contrast, among the decomposition products of the polymer, generation of acetic acid, propionic acid, 2-butanone, 2,4-pentanedione, and the like was suppressed by adding the antioxidant, and a reduction in tensile strength of polypropylene was also improved by adding the specific antioxidant.

Moreover, Non Patent Document 2 discloses the results when polymer blends containing polypropylene (PP) and polyethylene (LDPE) samples in different weight ratios were irradiated with 100 kGy of radiation in the maximum, and the conclusion that the polymer blends can improve the physical and thermal properties of the polymers contained in the polymer blends and can have properties enabling use in applications where radiation is involved.

However, Non Patent Document 1 only discloses the results of irradiation with 50 kGy of a γ-ray in the maximum, and Non Patent Document 2 only discloses the results of irradiation with 100 kGy of radiation in the maximum, while durability under a high-dose environment where the polymers are irradiated with the radiation in MGy order is not evaluated.

### RELATED ART DOCUMENTS

### NON PATENT DOCUMENTS

Non Patent Document 1: Yoko Kawamura, and two others, "Sankaboushizai-Ganyuu Porientiren, Poripuropiren, oyobi Porisutiren nitaisuru Ganmasenno Eikyou (Effects of Gamma Irradiation on Polyethylene, Polypropylene and Polystyrene Containing Antioxidants)", Food Irradiation, Japanese Research Association for Food Irradiation, September 30, 2003, Vol. 38, Issue 1-2 (2003), p. 11-22
Non Patent Document 2: Mehtap Sirin, and two others, "Effect of gamma irradiation on the thermal and mechanical behaviour of polypropylene and polyethylene blends", Radiation Physics and Chemistry, 2022, 194 (2022), 110034, p. 1-11

### SUMMARY OF THE INVENTION

### PROBLEM TO BE SOLVED BY THE INVENTION

The present invention has been made in consideration of such circumstances, and an object of the present invention is to provide a polymerizable composition for a resin-impregnated superconducting coil which has excellent impregnation properties and can provide a resin-impregnated superconducting coil having high durability under a high-dose environment (under a high-dose environment where the radiation dose per 100,000 hours is 1 MGy or more).

### MEANS FOR SOLVING PROBLEMS

The present inventors, who have conducted extensive research to achieve the above object, have found that the above object can be achieved by a polymerizable composition prepared by adding rare earth element-containing particles to a composition containing a norbornene-based monomer and a metathesis polymerization catalyst, and thus have completed the present invention.

Specifically, the present invention provides a polymerizable composition and a resin-impregnated superconducting coil below.
[1] A polymerizable composition for a resin-impregnated superconducting coil for use under a high-dose environment where the radiation dose per 100,000 hours is 1 MGy or more, the polymerizable composition comprising a norbornene-based monomer, rare earth element-containing particles, and a metathesis polymerization catalyst.
[2] The polymerizable composition according to [1], wherein the rare earth element-containing particles contain at least one rare earth element selected from the group consisting of cerium, praseodymium, gadolinium, dysprosium, holmium, and erbium.
[3] The polymerizable composition according to [1] or [2], wherein the content of the rare earth element-containing particles is 4 to 90% by mass.
[4] The polymerizable composition according to any one of [1] to [3], wherein the norbornene-based monomer contains 50% by mass or more of dicyclopentadiene.
[5] The polymerizable composition according to any one of [1] to [4], wherein the norbornene-based monomer contains a tricyclic compound and a pentacyclic compound.
[6] The polymerizable composition according to any one of claims [1] to [5], further comprising a silane coupling agent.
[7] The polymerizable composition according to any one of [1] to [6], wherein the polymerizable composition is in the form of two or more preparative liquid formulations each of which alone is not capable of polymerization, and can be formed by combining the preparative liquid formulations.
[8] The polymerizable composition according to any one of [1] to [7], wherein the resin-impregnated superconducting coil is a superconducting coil for generating a magnetic field in a particle accelerator.
[9] A resin-impregnated superconducting coil for use under a high-dose environment where the radiation dose per 100,000 hours is 1 MGy or more, the resin-impregnated superconducting coil being prepared by impregnating a superconducting coil with a norbornene-based resin prepared through bulk polymerization of the polymerizable composition according to any one of [1] to [8].
[10] The resin-impregnated superconducting coil according to [9], wherein the norbornene-based resin has a specific heat at a temperature of 4 K of 3.0 J/K/kg or more.

### EFFECTS OF THE INVENTION

The present invention provides a polymerizable composition for a resin-impregnated superconducting coil which has excellent impregnation properties and can provide a resin-impregnated superconducting coil having high durability under a high-dose environment (under a high-dose environment where the radiation dose per 100,000 hours is 1 MGy or more).

### BRIEF DESCRIPTION OF DRAWINGS

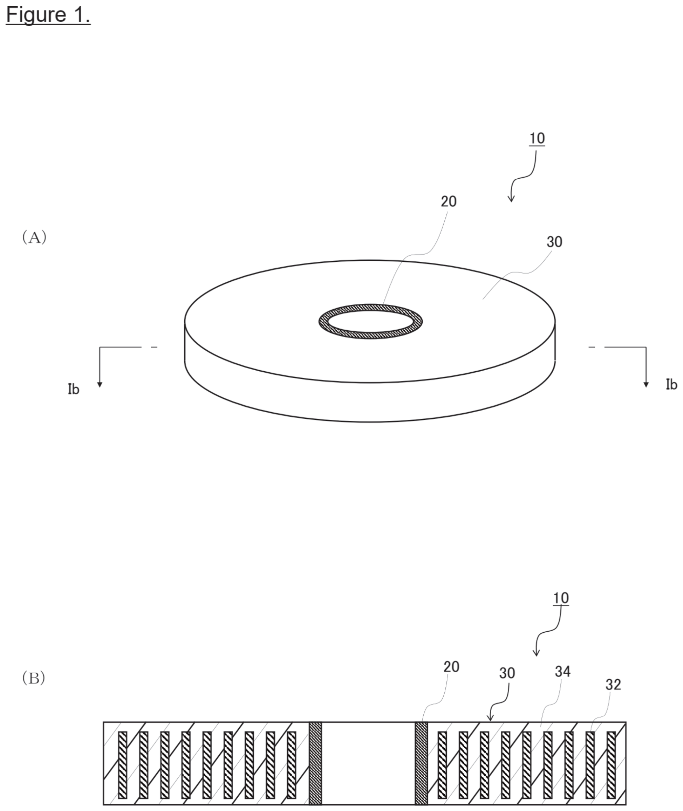

Fig. 1(A) is a schematic perspective view of the resin-impregnated superconducting coil according to one embodiment of the present invention, and Fig. 1(B) is a schematic cross-sectional view of the resin-impregnated superconducting coil according to one embodiment of the present invention.

### DESCRIPTION OF EMBODIMENTS

### <Polymerizable composition>

The polymerizable composition according to the present invention is a polymerizable composition for a resin-impregnated superconducting coil for use under a high-dose environment where the radiation dose per 100,000 hours is 1 MGy or more, the polymerizable composition comprising a norbornene-based monomer, rare earth element-containing particles, and a metathesis polymerization catalyst.

The superconducting coil for generating a magnetic field in a particle accelerator is usually used under a high-dose environment where the radiation dose per 100,000 hours is 1 MGy or more. It is considered that the radiation dose applied to the superconducting coil for generating a magnetic field in a particle accelerator is specifically about 2 to 5 MGy per 100,000 hours in many cases. For example, when the superconducting coil for generating a magnetic field in a particle accelerator operates for 100,000 hours, the average radiation dose per unit time applied to the superconducting coil is usually 10 Gy/h or more, and it is inferred that the average dose is about 20 to 50 Gy/h under a high-dose environment in many cases.

Under such situations, the polymerizable composition according to the present invention can provide a norbornene-based resin having high durability under a high-dose environment where the radiation dose per 100,000 hours falls within the above range. For this reason, use of the polymerizable composition according to the present invention enables production of a resin-impregnated superconducting coil which can be stably used for a long time even under such a high-dose environment.

The resin-impregnated superconducting coil prepared using the polymerizable composition according to the present invention can be suitably used under an environment where the radiation dose per 100,000 hours is 1 MGy or more. The lower limit of the radiation dose per 100,000 hours applied to the resin-impregnated superconducting coil prepared using the polymerizable composition according to the present invention is more preferably 2 MGy or more, still more preferably 3 MGy or more. On the other hand, the upper limit of the radiation dose per 100,000 hours is preferably 30 MGy or less, more preferably 25 MGy or less, still more preferably 20 MGy or less. The upper limit of the radiation dose per 100,000 hours may be 15 MGy or less, may be 10 MGy or less, may be 8 MGy or less, or may be 6 MGy or less.

The resin-impregnated superconducting coil prepared using the polymerizable composition according to the present invention can be suitably used under an environment where the total integrated radiation dose is 1 MGy or more. The lower limit of the total integrated radiation dose applied to the resin-impregnated superconducting coil prepared using the polymerizable composition according to the present invention is more preferably 2 MGy or more, still more preferably 3 MGy or more. On the other hand, the upper limit of the total integrated radiation dose is preferably 30 MGy or less, more preferably 25 MGy or less, still more preferably 20 MGy or less. The upper limit of the total integrated radiation dose may be 15 MGy or less, may be 10 MGy or less, may be 8 MGy or less, or may be 6 MGy or less. For example, the radiation dose per 100,000 hours may be within the above ranges.

Furthermore, the polymerizable composition according to the present invention comprises a norbornene-based monomer, and thus has low viscosity. For this reason, when used for the superconducting coil, the polymerizable composition according to the present invention demonstrates sufficient impregnation properties to the superconducting coil. For this reason, the polymerizable composition according to the present invention can be suitably used in production of the resin-impregnated superconducting coil.

In addition to this, while the norbornene-based resin prepared from the polymerizable composition according to the present invention has excellent mechanical properties even at a cryogenic temperature, it has relatively low adhesive strength to a superconducting wire constituting the superconducting coil. For this reason, breakage of the superconducting coil due to tensile stress caused by thermal shrinkage can be suppressed even when thermal shrinkage of the norbornene-based resin occurs during cooling, and thus occurrence of a quench caused by breakage of the superconducting coil can be effectively suppressed.

The norbornene-based monomer can be any compound having a norbornene ring structure, and is not particularly limited. Examples thereof include bicyclic compounds such as norbornene and norbornadiene; tricyclic compounds such as dicyclopentadiene; tetracyclic compounds such as tetracyclododecene; pentacyclic compounds such as tricyclopentadiene; heptacyclic compounds such as tetracyclopentadiene; derivatives thereof having a C₂ to C₁₀ alkenyl group, a C₂ to C₁₀ alkynyl group, a C₁ to C₁₀ alkylidene group, an epoxy group, or an (meth)acrylic group; and the like. These norbornene-based monomers can be used alone or in combination. As the norbornene-based monomer, preferred are the tricyclic compounds, and particularly preferred is dicyclopentadiene because they can further enhance the effects of the present invention. The norbornene-based monomer to be used preferably contains the tricyclic compound, especially dicyclopentadiene in a proportion of 50% by mass or more. Another preferred norbornene-based monomer is a combination of the tricyclic compound and the pentacyclic compound. In this case, the mass ratio "tricyclic compound:pentacyclic compound" is preferably 60:40 to 97:3, more preferably 80:20 to 95:5.

The polymerizable composition according to the present invention can contain the norbornene-based monomer in any proportion. The content thereof is preferably 50% by mass or more, more preferably 60% by mass or more, still more preferably 70% by mass or more in 100% by mass of the total polymerizable monomers contained in the polymerizable composition, and may be 100% by mass. By controlling the content of the norbornene-based monomer within these ranges, the norbornene-based resin prepared from the polymerizable composition according to the present invention can have higher durability under a high-dose environment. By controlling the content of the norbornene-based monomer within these ranges, the adhesive strength to the superconducting wire constituting the superconducting coil can be sufficiently reduced, and the mechanical properties at a cryogenic temperature can be further enhanced.

In the present invention, a monocyclic cycloolefin may be further used as a polymerizable monomer contained in the polymerizable composition.

Examples of monocyclic cycloolefins include, but should not be limited to, cyclobutene, cyclopentene, cyclohexene, cyclooctene, cyclododecene, cyclopentadiene, 1,4-cyclohexadiene, 1,5-cyclooctadiene, derivatives thereof having a C₂ to C₁₀ alkenyl group, a C₂ to C₁₀ alkynyl group, a C₁ to C₁₀ alkylidene group, an epoxy group, or an (meth)acrylic group, and the like. These monocyclic cycloolefins can be used alone or in combination.

Besides the norbornene-based monomer and the monocyclic cycloolefin, the polymerizable composition according to the present invention may also contain a different polymerizable monomer polymerizable therewith. Examples of such different polymerizable monomers include other cycloolefin monomers.

In the polymerizable composition according to the present invention, the content of the different polymerizable monomer other than the norbornene-based monomer is not particularly limited, and is preferably 50% by mass or less, more preferably 40% by mass or less, still more preferably 30% by mass or less in 100% by mass of the total polymerizable monomers contained in the polymerizable composition, and may be 0% by mass.

In the polymerizable composition according to the present invention, the total content of the polymerizable monomers including the norbornene-based monomer is preferably 10 to 95% by mass, more preferably 12 to 90% by mass, still more preferably 15 to 50% by mass in 100% by mass of the entire polymerizable composition.

The polymerizable composition according to the present invention comprises rare earth element-containing particles. This can ensure that the polymerizable composition according to the present invention has high durability under a high-dose environment (under a high-dose environment where the radiation dose per 100,000 hours is 1 MGy or more).

Any rare earth element-containing particles can be used without limitation in the present invention as long as they contain a rare earth element. Preferred are those containing at least one rare earth element selected from the group consisting of cerium, praseodymium, gadolinium, dysprosium, holmium, and erbium, and more preferred are those containing at least one rare earth element selected from the group consisting of gadolinium and holmium. From the viewpoint of high specific heat and excellent thermal storage properties, the rare earth element-containing particles are preferably those containing at least one rare earth element compound selected from the group consisting of CeCu₆, CeAl₂, HoCu₂, Er₃Ni, PrB₆, PrCu₂, DyCu₂, GdCu₂, Gd₂O₃, and Gd₂O₂S, more preferably those containing at least one rare earth element compound selected from the group consisting of HoCu₂, Gd₂O₃, and Gd₂O₂S, still more preferably those containing at least one rare earth element compound selected from the group consisting of Gd₂O₃ and Gd₂O₂S, particularly preferably those containing Gd₂O₃.

The rare earth element-containing particles used in the present invention may further contain a metal oxide such as silver oxide (Ag₂O) or copper oxide (Cu₂O) or a metal such as bismuth (Bi) or lead (Pb).

The rare earth element-containing particles used in the present invention can have any particle size. The number-based modal particle size is preferably 0.05 µm or more and less than 1.5 µm, more preferably 0.07 to 1.3 µm, still more preferably 0.1 to 1.2 µm, particularly preferably 0.7 to 1.1 µm. When the number-based modal particle size of the rare earth element-containing particles is within the above ranges, the rare earth element-containing particles have excellent thermal storage properties and excellent heat dissipating properties. Thus, the resin-impregnated superconducting coil produced using the polymerizable composition according to the present invention can be cooled in a shorter time compared to conventional ones.

The number-based modal particle size indicates the particle size with the largest probability of presence of particles in terms of the number of particles, and the particle size at which a particle size distribution curve where the frequency of particle size in terms of the number of particles is plotted against the particle size in logarithm reaches its maximum value can be defined as the number-based modal particle size. The number-based modal particle size of the rare earth element-containing particles can be calculated by determining a number-based particle size distribution from a particle size distribution measured by a light scattering method (laser diffraction/scattering method).

The rare earth element-containing particles can have any shape without limitation, and examples thereof include spherical shapes, bale-like shapes, spheroidal shapes, cylindrical shapes, fibrous shapes, amorphous shapes, and the like. A mixture of particles having some of these shapes may be used. For example, a combination of spherical rare earth element-containing particles and cylindrical rare earth element-containing particles may be used. Alternatively, the rare earth element-containing particles may be a mixture of two or more types of particles having different compositions.

Alternatively, the rare earth element-containing particles may be particles of a rare earth element compound containing a rare earth element and having surfaces on which a coating layer of a metal having high conductivity and thermal conductivity is formed. Examples of such a metal having high conductivity and thermal conductivity include silver, gold, nickel, copper, and the like.

The rare earth element-containing particles used in the present invention may have hydrophobized surfaces. Use of hydrophobized rare earth element-containing particles can prevent aggregation and sedimentation of the particles in the polymerizable composition, and enables homogeneous dispersion of the particles in the norbornene-based resin prepared through bulk polymerization of the polymerizable composition. Examples of a treatment agent used in hydrophobization include silane coupling agents, titanate coupling agents, aluminum coupling agents, fatty acids such as stearic acid, oils and fats, surfactants, waxes, and the like. The treatment agent, when used, can also be simply compounded with the rare earth element-containing particles in the polymerizable composition.

The treatment agent to be used is preferably a silane coupling agent having at least one hydrocarbon group having a norbornene structure because the polymerizable composition, even after addition of the rare earth element-containing particles, has a low viscosity and has thixotropy (viscosity in a static state) which is unlikely to increase. Although the silane coupling agent can also function as a monomer, the silane coupling agent is regarded as a coupling agent in the present invention. Specific examples of such a silane coupling agent include bicycloheptenyltrimethoxysilane, bicycloheptenyltriethoxysilane, bicycloheptenylethyltrimethoxysilane, bicycloheptenylethyltriethoxysilane, and the like. As the treatment agent, a silane coupling agent other than those listed above, such as a silane coupling agent without a norbornene structure (such as vinyltrimethoxysilane) can be used. These treatment agents can be used alone or in combination. The content of the treatment agent in the polymerizable composition according to the present invention is preferably 0.1 to 5% by mass, more preferably 0.3 to 2% by mass, still more preferably 0.5 to 1% by mass.

The content of the rare earth element-containing particles in the polymerizable composition according to the present invention is preferably 4 to 90% by mass, more preferably 10 to 88% by mass, still more preferably 20 to 87% by mass, further still more preferably 70 to 86% by mass, particularly preferably 75 to 85% by mass in 100% by mass of the entire polymerizable composition. By controlling the content of the rare earth element-containing particles within these ranges, sufficient protection of the superconducting wire can be obtained while the polymerizable composition when uncured can have sufficiently high fluidity.

The metathesis polymerization catalyst used in the present invention can be any metathesis polymerization catalyst as long as it can ring-opening polymerize the norbornene-based monomer, and known metathesis polymerization catalysts can be used.

The metathesis polymerization catalyst used in the present invention is a complex having a transition metal atom as a central atom to which a plurality of ions, atoms, polyatomic ions, and/or compounds are bonded. As the transition metal atom, atoms of Groups 5, 6, and 8 (Long Periodic Table, hereinafter, the same is applied) are used. Although there is no particular limitation to the atoms of the respective groups, examples of atoms of Group 5 include tantalum, examples of atoms of Group 6 include molybdenum and tungsten, and examples of atoms of Group 8 include ruthenium and osmium. Among these transition metal atoms, preferred are ruthenium and osmium of Group 8. That is, the metathesis polymerization catalyst used in the present invention is preferably a complex having ruthenium or osmium as the central atom, more preferably a complex having ruthenium as the central atom. The complex having ruthenium as the central atom is preferably a ruthenium carbene complex in which a carbene compound is coordinated with ruthenium. Here, the "carbene compound" is a generic name for a compound having a methylene free radical, and refers to a compound having an uncharged divalent carbon atom (carbene carbon) represented by (>C:). Because the ruthenium carbene complex has high catalytic activity during bulk ring-opening polymerization, a high-quality polymer having a low odor derived from unreacted monomers is prepared with high productivity. The ruthenium carbene complex, which is relatively stable to oxygen or moisture in the air and is hardly deactivated, can also be used under the air. These metathesis polymerization catalysts may be used alone or in combination.

Examples of the ruthenium carbene complex include those represented by General Formula (1) or (2) below:

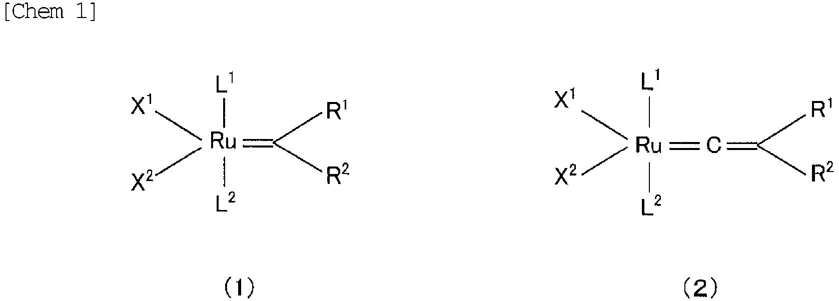

In General Formulae (1) and (2) above, R¹ and R² each independently represent a hydrogen atom, a halogen atom, or a C₁ to C₂₀ organic group which may contain a halogen atom, an oxygen atom, a nitrogen atom, a sulfur atom, a phosphorus atom, or a silicon atom; and these groups may be substituted, or may be bonded to each other to form a ring. Examples of R¹ and R² bonded to each other to form a ring include indenylidenes which may be substituted, such as a phenylindenylidene group.

Specific examples of the C₁ to C₂₀ organic group which may contain a halogen atom, an oxygen atom, a nitrogen atom, a sulfur atom, a phosphorus atom, or a silicon atom include C₁ to C₂₀ alkyl groups, C₂ to C₂₀ alkenyl groups, C₂ to C₂₀ alkynyl groups, C₆ to C₂₀ aryl groups, C₁ to C₂₀ alkoxy groups, C₂ to C₂₀ alkenyloxy groups, C₂ to C₂₀ alkynyloxy groups, C₆ to C₂₀ aryloxy groups, C₁ to C₈ alkylthio groups, a carbonyloxy group, C₁ to C₂₀ alkoxycarbonyl groups, C₁ to C₂₀ alkylsulfonyl groups, C₁ to C₂₀ alkylsulfinyl groups, C₁ to C₂₀ alkylsulfonic acid groups, C₆ to C₂₀ arylsulfonic acid groups, a phosphonic acid group, C₆ to C₂₀ arylphosphonic acid groups, C₁ to C₂₀ alkylammonium groups, C₆ to C₂₀ arylammonium groups, and the like. These C₁ to C₂₀ organic groups which may contain a halogen atom, an oxygen atom, a nitrogen atom, a sulfur atom, a phosphorus atom, or a silicon atom may be substituted. Examples of substituents include C₁ to C₁₀ alkyl groups, C₁ to C₁₀ alkoxy groups, C₆ to C₁₀ aryl groups, and the like.

X¹ and X² each independently represent any anionic ligand. The anionic ligand is a ligand having a negative charge when separated from a central metal atom, and examples thereof include halogen atoms, diketonate groups, substituted cyclopentadienyl groups, alkoxyl groups, aryloxy groups, a carboxyl group, and the like.

L¹ and L² represent a heteroatom-containing carbene compound or a neutral electron-donating compound other than the heteroatom-containing carbene compound. The heteroatom-containing carbene compound and the neutral electron-donating compound other than the heteroatom-containing carbene compound are compounds having a neutral charge when separated from the central metal. To improve catalytic activity, preferred is the heteroatom-containing carbene compound. The heteroatom indicates atoms of Groups 15 and 16 in the Periodic Table, and specifically examples thereof include a nitrogen atom, an oxygen atom, a phosphorus atom, a sulfur atom, an arsenic atom, a selenium atom, and the like. Among these, preferred are a nitrogen atom, an oxygen atom, a phosphorus atom, and a sulfur atom, and more preferred is a nitrogen atom to obtain a stable carbene compound.

The heteroatom-containing carbene compound is preferably a compound represented by General Formula (3) or (4) below. To improve catalytic activity, more preferred is a compound represented by General Formula (3) below:

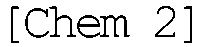

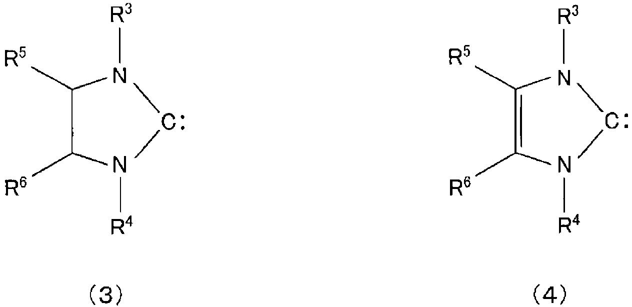

In General Formulae (3) and (4) above, R³, R⁴, R⁵, and R⁶ each independently represent a hydrogen atom; a halogen atom; or a C₁ to C₂₀ organic group which may contain a halogen atom, an oxygen atom, a nitrogen atom, a sulfur atom, a phosphorus atom, or a silicon atom. Specific examples of the C₁ to C₂₀ organic group which may contain a halogen atom, an oxygen atom, a nitrogen atom, a sulfur atom, a phosphorus atom, or a silicon atom are the same as those listed in General Formulae (1) and (2) above.

R³, R⁴, R⁵, and R⁶ may also be bonded to each other in any combination to form a ring.

Since the effects of the present invention become more prominent, R⁵ and R⁶ are preferably a hydrogen atom. R³ and R⁴ are preferably an aryl group which may be substituted, more preferably a phenyl group having a C₁ to C₁₀ alkyl group as a substituent, still more preferably a mesityl group.

Examples of the neutral electron-donating compound include an oxygen atom, water, carbonyls, ethers, nitriles, esters, phosphines, phosphinites, phosphites, sulfoxides, thioethers, amides, imines, aromatics, cyclic diolefins, olefins, isocyanides, thiocyanates, and the like.

In General Formulae (1) and (2) above, R¹, R², X¹, X², L¹, and L² may stand alone and/or may be bonded to each other in any combination to form a multidentate chelating ligand.

Among these compounds represented by General Formula (1) or (2) above, preferred are compounds represented by General Formula (1) as the ruthenium carbene complex used in the present invention, since the effects of the present invention become more prominent. Among these, more preferred are compounds represented by General Formula (5) or (6) below.

General Formula (5) is shown below:

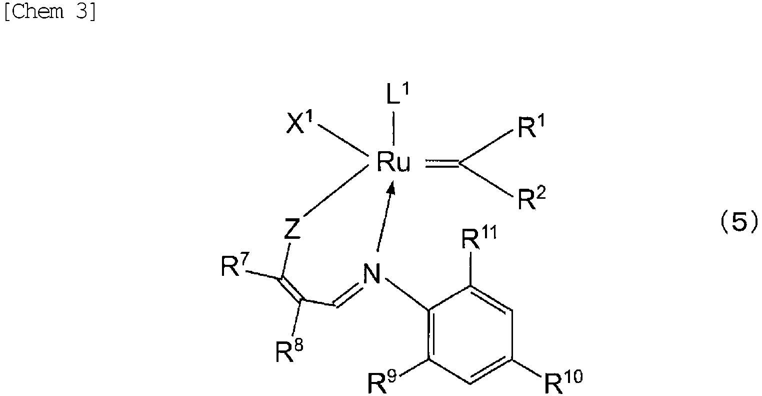

In General Formula (5) above, Z is an oxygen atom, a sulfur atom, a selenium atom, NR¹², PR¹², or AsR¹²; and R¹² is a hydrogen atom, a halogen atom, or a C₁ to C₂₀ organic group which may contain a halogen atom, an oxygen atom, a nitrogen atom, a sulfur atom, a phosphorus atom, or a silicon atom. Since the effects of the present invention become more prominent, Z is preferably an oxygen atom.

R¹, R², X¹, and L¹ are the same as those in General Formulae (1) and (2) above, and may stand alone and/or may be bonded to each other in any combination to form a multidentate chelating ligand. It is preferred that X¹ and L¹ do not form a multidentate chelating ligand and R¹ and R² be bonded to each other to form a ring, which is more preferably an indenylidene group which may be substituted, still more preferably a phenylindenylidene group.

Specific examples of the C₁ to C₂₀ organic group which may contain a halogen atom, an oxygen atom, a nitrogen atom, a sulfur atom, a phosphorus atom, or a silicon atom are the same as those in General Formulae (1) and (2) above.

In General Formula (5) above, R⁷ and R⁸ are each independently a hydrogen atom, a C₁ to C₂₀ alkyl group, a C₂ to C₂₀ alkenyl group, or a C₆ to C₂₀ heteroaryl group. These groups may be substituted, or may be bonded to each other to form a ring. Examples of substituents include C₁ to C₁₀ alkyl groups, C₁ to C₁₀ alkoxy groups, or C₆ to C₁₀ aryl groups. Although the ring when it is formed by R⁷ and R⁸ may be any one of an aromatic ring, an alicyclic ring, and a heterocyclic ring, R⁷ and R⁸ preferably form an aromatic ring, more preferably a C₆ to C₂₀ aromatic ring, still more preferably a C₆ to C₁₀ aromatic ring.

In General Formula (5) above, R⁹, R¹⁰, and R¹¹ are each independently a hydrogen atom; a halogen atom; or a C₁ to C₂₀ organic group which may contain a halogen atom, an oxygen atom, a nitrogen atom, a sulfur atom, a phosphorus atom, or a silicon atom. These groups may be substituted, or may be bonded to each other to form a ring. Specific examples of the C₁ to C₂₀ organic group which may contain a halogen atom, an oxygen atom, a nitrogen atom, a sulfur atom, a phosphorus atom, or a silicon atom are the same as those in General Formulae (1) and (2) above.

R⁹, R¹⁰, and R¹¹ are preferably a hydrogen atom or a C₁ to C₂₀ alkyl group, more preferably a hydrogen atom or a C₁ to C₃ alkyl group.

Specific examples of the compound represented by General Formula (5) above and a method of producing the same include those described in WO 2003/062253 (JP 2005-515260 T).

General Formula (6) is shown below:

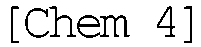

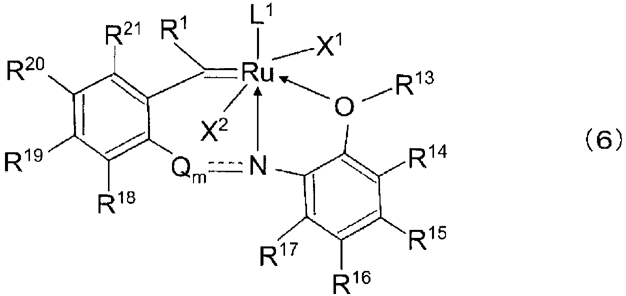

In General Formula (6) above, m is 0 or 1. m is preferably 1, and in this case, Q is an oxygen atom, a nitrogen atom, a sulfur atom, a methylene group, an ethylene group, or a carbonyl group, preferably a methylene group.

In General Formula (6) above,

[Chem 5] - - - -

is a single bond or a double bond, preferably a single bond.

R¹, X¹, X², and L¹ are the same as those in General Formulae (1) and (2) above, and may stand alone and/or may be bonded to each other in any combination to form a multidentate chelating ligand. Preferably, X¹, X², and L¹ do not form a multidentate chelating ligand and R¹ is a hydrogen atom.

R¹³ to R²¹ are a hydrogen atom, a halogen atom, or a C₁ to C₂₀ organic group which may contain a halogen atom, an oxygen atom, a nitrogen atom, a sulfur atom, a phosphorus atom, or a silicon atom. These groups may be substituted, or may be bonded to each other to form a ring. Specific examples of the C₁ to C₂₀ organic group which may contain a halogen atom, an oxygen atom, a nitrogen atom, a sulfur atom, a phosphorus atom, or a silicon atom are the same as those in General Formulae (1) and (2) above.

R¹³ is preferably a C₁ to C₂₀ alkyl group, more preferably a C₁ to C₃ alkyl group. R¹⁴ to R¹⁷ are preferably a hydrogen atom, and R¹⁸ to R²¹ are preferably a hydrogen atom or a halogen atom.

Specific examples of the compound represented by General Formula (6) above and a method for producing the same include those described in WO 2011/079799 (JP 2013-516392 T).

The content of the metathesis polymerization catalyst is preferably 0.005 mmol or more, more preferably 0.01 to 50 mmol, still more preferably 0.015 to 20 mmol relative to 1 mol of the total amount of the polymerizable monomers used in the reaction.

The polymerizable composition according to the present invention may contain a radical generator, a diisocyanate compound, a polyfunctional (meth)acrylate compound, and other optional components as desired.

The radical generator, when heated, generates radicals, by which the radical generator induces a cross-linking reaction in a norbornene-based resin formed through bulk polymerization. The sites at which the cross-linking reaction is induced by the radical generator are mainly carbon-carbon double bonds of the norbornene-based resin while saturated bonds may also be cross-linked in some cases. Examples of the radical generator include organic peroxides, diazo compounds, and nonpolar radical generators.

The amount of the radical generator in the polymerizable composition according to the present invention is preferably 0.1 to 10 parts by mass, more preferably 0.5 to 5 parts by mass relative to 100 parts by mass of the total amount of the polymerizable monomers used in the reaction.

Examples of the diisocyanate compounds include aromatic diisocyanate compounds such as methylenediphenyl 4,4'-diisocyanate (MDI), toluene-2,4-diisocyanate, 4-methoxy-1,3-phenylene diisocyanate, 4-isopropyl-1,3-phenylene diisocyanate, 4-chloro-1,3-phenylene diisocyanate, 4-butoxy-1,3-phenylene diisocyanate, 2,4-diisocyanate diphenyl ether, 1,4-phenylene diisocyanate, tolylene diisocyanate, xylylene diisocyanate (XDI), 1,5-naphthalene diisocyanate, benzidine diisocyanate, o-nitrobenzidine diisocyanate, and dibenzyl 4,4'-diisocyanate; aliphatic diisocyanate compounds such as methylene diisocyanate, 1,4-tetramethylene diisocyanate, 1,6-hexamethylene diisocyanate, and 1,10-decamethylene diisocyanate; alicyclic diisocyanate compounds such as 4-cyclohexylene diisocyanate, 4,4'-methylene bis(cyclohexyl isocyanate), 1,5-tetrahydronaphthalene diisocyanate, isophorone diisocyanate, hydrogenated MDI, and hydrogenated XDI; and polyurethane prepolymers terminated with isocyanate, which are prepared by reacting these diisocyanate compounds with a low molecular weight polyol or polyamine; and the like. In addition, known isocyanurate forms, biuret forms, adduct forms, or polymeric forms of these compounds, which have a polyfunctional isocyanate group and are conventionally used, can be used without limitation. Examples thereof include dimers of 2,4-toluylene diisocyanate, triphenylmethane triisocyanate, tris-(p-isocyanate phenyl) thiophosphite, polyfunctional aromatic isocyanate compounds, polyfunctional aromatic aliphatic isocyanate compounds, polyfunctional aliphatic isocyanate compounds, fatty acid-modified polyfunctional aliphatic isocyanate compounds, block-type polyfunctional isocyanate compounds such as blocked polyfunctional aliphatic isocyanate compounds, polyisocyanate prepolymers, and the like. Among these, suitably used are aromatic diisocyanate compounds, aliphatic diisocyanate compounds, and alicyclic diisocyanate compounds, which are non-block-type polyfunctional isocyanate compounds, because of their availability and ease in handling. These compounds can be used alone or in combination.

The block-type polyfunctional isocyanate compound indicates an isocyanate compound having at least two isocyanate groups in the molecule which are inactivated at normal temperature through a reaction with an active hydrogen-containing compound. The isocyanate compound usually has a structure having isocyanate groups masked with a blocking agent, examples of the blocking agent including alcohols, phenols, ε-caprolactam, oximes, active methylene compounds, and the like. The block-type polyfunctional isocyanate compound is usually not reactive at normal temperature, leading to high storage stability, while it exhibits high reactivity due to the isocyanate groups regenerated when heated usually at 140 to 200°C.

These diisocyanate compound may be used alone or in combination. The compounding amount of the diisocyanate compound in the polymerizable composition according to the present invention is preferably 0.5 to 20 parts by mass, more preferably 1 to 15 parts by mass, still more preferably 2 to 10 parts by mass relative to 100 parts by mass of the total amount of the polymerizable monomers used in the reaction.

To further improve the cryogenic mechanical properties of the norbornene-based resin prepared from the polymerizable composition according to the present invention, a polyfunctional (meth)acrylate compound may be used. When the polyfunctional (meth)acrylate compound is used in combination with the diisocyanate compound, the diisocyanate compound forms chemical bonds between its active hydrogen reactive groups in the molecule and hydroxyl groups present in the polyfunctional (meth)acrylate compound, and as a result, the cryogenic mechanical properties of the norbornene-based resin can be further enhanced. Preferred examples of the polyfunctional (meth)acrylate compound include ethylene glycol dimethacrylate, triethylene glycol dimethacrylate, trimethylolpropane trimethacrylate, and neopentyl glycol dimethacrylate.

These polyfunctional (meth)acrylate compounds may be used alone or in combination. The compounding amount of the polyfunctional (meth)acrylate compound in the polymerizable composition according to the present invention is preferably 0.5 to 20 parts by mass, more preferably 1 to 15 parts by mass, still more preferably 2 to 10 parts by mass relative to 100 parts by mass of the total amount of the polymerizable monomers used in the reaction.

Examples of other optional components include activating agents, activity regulators, elastomers, antioxidants (anti-aging agents), dispersants, and the like.

The activating agent is a compound which acts as a cocatalyst for the above-mentioned metathesis polymerization catalyst to improve the polymerization activity of the catalyst. Examples of activating agents to be used include alkylaluminum halides such as ethylaluminum dichloride and diethylaluminum chloride; alkoxyalkylaluminum halides prepared by substituting part of alkyl groups in these alkylaluminum halides with an alkoxy group; organic tin compounds; and the like. The activating agent can be used in any amount, and the amount is preferably 0.1 to 100 mol, more preferably 1 to 10 mol relative to 1 mol of the total metathesis polymerization catalysts used in the polymerizable composition.

As described later, when two or more reaction stock solutions are mixed to prepare a polymerizable composition, the polymerizable composition is injected into a mold, and polymerization is initiated, the activity regulator is used to prevent the polymerization from starting during the injection.

When a compound of a transition metal in Group 5 or 6 in the Periodic Table is used as the metathesis polymerization catalyst, examples of activity regulators include compounds having action to reduce the metathesis polymerization catalyst, and the like. Alcohols, haloalcohols, esters, ethers, nitriles, and the like can be used. Among these, preferred are alcohols and haloalcohols, and more preferred are haloalcohols.

Specific examples of alcohols include n-propanol, n-butanol, n-hexanol, 2-butanol, isobutyl alcohol, isopropyl alcohol, t-butyl alcohol, and the like. Specific examples of haloalcohols include 1,3-dichloro-2-propanol, 2-chloroethanol, 1-chlorobutanol, and the like.

In particular, when a ruthenium carbene complex is used as the metathesis polymerization catalyst, examples of the activity regulator include Lewis base compounds. Examples of the Lewis base compounds include Lewis base compounds containing a phosphorus atom, such as tricyclopentyl phosphine, tricyclohexyl phosphine, triphenyl phosphine, triphenyl phosphite, and n-butyl phosphine; Lewis base compounds containing a nitrogen atom, such as n-butylamine, pyridine, 4-vinylpyridine, acetonitrile, ethylenediamine, N-benzylidenemethylamine, pyrazine, piperidine, and imidazole; and the like. In addition, norbornenes substituted by an alkenyl group, such as vinyl norbornene, propenyl norbornene, and isopropenyl norbornene, are polymerizable monomers, and also act as the activity regulator. The amount of these activity regulators may be appropriately adjusted depending on the compound to be used.

Examples of the elastomers include natural rubber, polybutadiene, polyisoprene, styrene-butadiene copolymers (SBR), styrene-butadiene-styrene copolymers (SBS), styrene-isoprene-styrene copolymers (SIS), ethylene-propylene-diene terpolymers (EPDM), ethylene-vinyl acetate copolymers (EVA), hydrides thereof, and the like. The viscosity of the elastomer can be adjusted for use by dissolving the elastomer in the polymerizable composition. By adding the elastomer, a norbornene-based resin having improved impact resistance can be formed through bulk polymerization of the composition. The amount of the elastomer used is preferably 0.5 to 20 parts by mass, more preferably 2 to 10 parts by mass relative to 100 parts by mass of the total amount of the polymerizable monomers in the polymerizable composition.

Examples of antioxidants (anti-aging agents) include a variety of antioxidants for plastics and rubbers, such as phenol antioxidants, phosphorus antioxidants, and amine antioxidants. As the dispersant, anionic surfactants, cationic surfactants, and nonionic surfactants can be optionally used. Preferred are nonionic surfactants.

The polymerizable composition according to the present invention is prepared by appropriately mixing the above-mentioned components according to a known method. The polymerizable composition according to the present invention may be prepared by preparing two or more preparative liquid formulations, and mixing the two or more preparative liquid formulations with a mixing apparatus immediately before bulk polymerization to form a norbornene-based resin. For the preparative liquid formulations, the above-mentioned components are distributed and prepared into two or more solutions such that each of them alone is not capable of bulk polymerization, and when all the solutions are mixed, they can form the polymerizable composition containing the above-mentioned components in predetermined proportions (where the total content of the components is 100% by mass). In other words, the polymerizable composition according to the present invention may be a polymerizable composition which is in the form of two or more preparative liquid formulations each of which alone is not capable of polymerization, and can be formed by combining the preparative liquid formulations. Examples of a combination of such two or more reaction stock solutions include two combinations (a) and (b) below depending on the type of the metathesis polymerization catalyst used.
(a): The metathesis polymerization catalyst to be used can be a metathesis polymerization catalyst which alone has not polymerization reaction activity while exhibiting polymerization reaction activity when used in combination with the activating agent. In this case, a preparative liquid formulation (solution A) containing the polymerizable monomer containing the norbornene-based monomer and the activating agent and a preparative liquid formulation (solution B) containing the polymerizable monomer containing the norbornene-based monomer and the metathesis polymerization catalyst are used, and the polymerizable composition can be prepared by mixing these. Furthermore, a preparative liquid formulation (solution C) containing the polymerizable monomer containing the norbornene-based monomer but not any of the metathesis polymerization catalyst and the activating agent may be used in combination.
(b): When a metathesis polymerization catalyst which alone has polymerization reaction activity is used, the polymerizable composition can be prepared by mixing a preparative liquid formulation (i) containing the polymerizable monomer containing the norbornene-based monomer and a preparative liquid formulation (ii) containing the metathesis polymerization catalyst. At this time, the preparative liquid formulation (ii) to be used is usually in the form of a solution or dispersion of the metathesis polymerization catalyst in a small amount of an inert solvent. Examples of such a solvent include aromatic hydrocarbons such as toluene, xylene, ethylbenzene, and trimethylbenzene; ketones such as methyl ethyl ketone, cyclopentanone, cyclohexanone, 2-heptanone, and 4-hydroxy-4-methyl-2-pentanone; cyclic ethers such as tetrahydrofuran; diethyl ether, dichloromethane, dimethyl sulfoxide, ethyl acetate, and the like.

The optional components such as the radical generator, the diisocyanate compound, and the polyfunctional (meth)acrylate compound may be contained in any one of the preparative liquid formulations, or may be added in the form of a mixed solution other than the preparative liquid formulations.

Examples of the mixing apparatus used in mixing of the preparative liquid formulations above include collision mixing apparatuses usually used in reaction injection molding, low pressure mixers such as dynamic mixers and static mixers, and the like.

### <Resin-impregnated superconducting coil>

The resin-impregnated superconducting coil according to the present invention is a resin-impregnated superconducting coil for use under a high-dose environment where the radiation dose per 100,000 hours is 1 MGy or more, the resin-impregnated superconducting coil being prepared by impregnating a superconducting coil with a norbornene-based resin prepared through bulk polymerization of the above-mentioned polymerizable composition according to the present invention. In other words, the resin-impregnated superconducting coil according to the present invention comprises a superconducting coil impregnated with a norbornene-based resin prepared through bulk polymerization of the polymerizable composition according to the present invention.

Here, Fig. 1(A) is a schematic perspective view of a resin-impregnated superconducting coil 10 according to an embodiment of the present invention, and Fig. 1(B) is a schematic cross-sectional view of the resin-impregnated superconducting coil 10 according to the embodiment of the present invention. Although the resin-impregnated superconducting coil 10 according to an embodiment of the present invention shown in Figs. 1(A) and 1(B) will be illustrated below to describe the resin-impregnated superconducting coil according to the present invention, the present invention will not be limited to the embodiment shown in Figs. 1(A) and 1(B).

As shown in Fig. 1(A), the resin-impregnated superconducting coil 10 according to the present embodiment includes a winding frame 20 and a coil body 30 formed around the winding frame 20. Fig. 1(B) is a cross-sectional view of the resin-impregnated superconducting coil 10 taken along line Ib-Ib in Fig. 1(A). As shown in Fig. 1(B), the coil body 30 includes a superconducting wire 32 and a wire protective layer 34.

The winding frame 20 is formed from a glass fiber-reinforced composite material, a high-strength polyethylene fiber-reinforced composite material, stainless steel, aluminum, or the like, for example, and the superconducting wire 32 is wound around the winding frame 20 concentrically therewith. The wire protective layer 34 is a protective layer for protecting the superconducting wire 32. In the present embodiment, the wire protective layer 34 is formed with the norbornene-based resin prepared through bulk polymerization of the above-mentioned polymerizable composition according to the present invention.

The resin-impregnated superconducting coil 10 may be configured such that the coil body 30 includes an insulating plate on the top surface of the coil body 30 and/or the bottom surface thereof.

The resin-impregnated superconducting coil 10 according to the present embodiment can be produced by a first production method or a second production method described below.

Specifically, in the first production method, the resin-impregnated superconducting coil 10 is produced by winding the superconducting wire 32 around the winding frame 20 while the above-mentioned polymerizable composition according to the present invention is being applied to the superconducting wire, and then polymerizing and curing the polymerizable composition.

Examples of the superconducting wire 32 include wires containing superconducting materials such as niobium titanium alloys, A15 intermetallic compounds (such as niobium 3 tin, niobium 3 aluminum, vanadium 3 gallium), magnesium diboride, rare earth element barium copper oxide (REBa₂Cu₃O₇: REBCO) containing yttrium barium copper oxide (YBa₂Cu₃O₇: YBCO) or gadolinium barium copper oxide (GdBa₂Cu₃O₇: GdBCO), bismuth strontium copper oxides (Bi₂Sr₂CaCu₂O_{X}: Bi2212, Bi₂Sr₂Ca₂Cu₃O_{X}: Bi2223), and the like. With respect to the shape, examples of the superconducting wire 32 include round wires, rectangular wires, twisted wires, tape wires, and the like. Fig. 1(B) illustrates a case where the superconducting wire 32 is a tape wire.

A superconducting wire 32 having a multilayered structure may be used. For example, such a superconducting wire 32 can be configured to include a first stabilizing layer, a substrate, an intermediate layer, a superconducting layer, a protective layer, and a second stabilizing layer in this order.

The first stabilizing layer can be formed with a metal having high specific heat, such as copper or aluminum. The substrate can be formed with a high-strength metal such as a nickel-based alloy, stainless steel, or copper. The intermediate layer can have a structure including a plurality of laminated layers of oxides. The superconducting layer can be formed with the above-mentioned superconducting material. Furthermore, the protective layer can be formed with silver, gold, or platinum, for example, and can have a function to suppress diffusion of oxygen from the superconducting layer. The second stabilizing layer can be formed with a metal having high specific heat, such as copper or aluminum.

The polymerizable composition can be applied to the superconducting wire 32, for example, by continuously transporting the superconducting wire 32 from a feeder to a roller and passing it through the polymerizable composition. The transporting rate of the superconducting wire 32 may be appropriately adjusted such that the polymerizable composition sufficiently adheres to the surface of the superconducting wire 32.

The polymerizable composition can be prepared by separately introducing the above-mentioned two or more preparative liquid formulations to a collision mixing apparatus to bring these liquid formulations into contact with each other, and mixing these. Examples of the mixing apparatus include collision mixing apparatuses for reaction injection molding (RIM), low pressure mixing apparatuses such as dynamic mixers and static mixers, and the like. The resulting polymerizable composition can be stored appropriately in any tank or the like until it is used in passing of the superconducting wire 32 therethrough. Although the viscosity of the polymerizable composition may gradually increase in some cases, to evenly apply the polymerizable composition onto the superconducting wire 32, it is desirable that the superconducting wire 32 is passed through the polymerizable composition before the polymerizable composition reaches its usable life (which is the time from a time at which the polymerizable composition is obtained to a time at which the polymerizable composition changes from a liquid state to a pudding-like state and no longer flows, and is also referred to as pot life).

Subsequently, the superconducting wire 32 passing through the polymerizable composition is wound around the winding frame 20, and then the polymerizable composition is polymerized and cured through bulk polymerization. Thus, the resin-impregnated superconducting coil 10 can be produced.

In the case where the superconducting wire 32 has no insulating layer on its surface, preferably, insulation of the superconducting wire 32 in the circumferential direction is ensured by preliminarily winding an insulating tape around the superconducting wire 32 or by inserting an insulating sheet between windings of the superconducting wire 32 when the wire is wound around the winding frame 20. Examples of materials for the insulating tape and the insulating sheet include polyimide, aramid fiber paper, and the like. Alternatively, paraffin, wax, grease, or the like may be preliminarily applied onto the surface of the superconducting wire 32.

The polymerizable composition wound together with the superconducting wire 32 and impregnated into windings of the superconducting wire 32 and/or applied onto the surface of the superconducting wire 32 can be polymerized and cured, for example, by placing the workpiece in a mold formed of a male part and a female part and heating the mold. The heating temperature at this time is preferably 10 to 150°C, more preferably 30 to 120°C, still more preferably 50 to 100°C, and the heating time is preferably 20 seconds to 20 minutes, more preferably 20 seconds to 5 minutes. During heating, as needed, nitrogen gas may be sealed in the mold, and a pressure of preferably 0.1 to 1 MPa may be applied. After the heating, the mold is opened, and removed. Thus, the resin-impregnated superconducting coil 10 can be obtained.

Alternatively, the following method can also be used as a second production method. Specifically, in the second production method, the superconducting wire 32 not impregnated with the polymerizable composition is wound around the winding frame 20, and the superconducting wire 32 wound around the winding frame 20 is impregnated with the polymerizable composition. Subsequently, the polymerizable composition is polymerized and cured to produce the resin-impregnated superconducting coil 10.

The superconducting wire 32 wound around the winding frame 20 can be impregnated with the polymerizable composition by a variety of methods. The impregnation can be performed, for example, as in the case of the first production method above, by storing the polymerizable composition prepared in any tank or the like, immersing the superconducting wire 32 wound around the winding frame 20 into the tank, and keeping the immersion for a predetermined time. In this case, the polymerizable composition may be impregnated by immersing the superconducting wire 32 while removing the air or the like by vacuuming and degassing under reduced pressure. Furthermore, nitrogen gas may be sealed, and the impregnation may be performed under pressure. Alternatively, the impregnation may be performed by placing the superconducting wire 32 wound around the winding frame 20 in a mold formed of a male part and a female part, removing the air or the like by vacuuming, and injecting the polymerizable composition into the mold while degassing is being performed under reduced pressure. Furthermore, after the injection of the polymerizable composition, nitrogen gas may be sealed, and the impregnation may be performed under pressure. The pressure in impregnation of the polymerizable composition into the superconducting wire 32 wound around the winding frame 20 is preferably 0.1 to 1 MPa.

The polymerizable composition impregnated into the superconducting wire 32 wound around the winding frame 20 can be polymerized and cured in the same manner as in the first production method described above. In the second production method, the resin-impregnated superconducting coil 10 can also be obtained by opening and removing the mold after the heating is completed.

As described above, the resin-impregnated superconducting coil 10 can be obtained by the first production method or the second production method. Besides, the resin-impregnated superconducting coil 10 according to the present embodiment can also be produced, for example, by preliminarily impregnating an insulating tape or sheet to be wound around the superconducting wire 32 with the polymerizable composition according to the present invention to prepare a prepreg, and winding the prepreg around the superconducting wire 32, or by inserting the prepreg between windings of the superconducting wire 32 when the superconducting wire 32 is wound around the winding frame 20, and polymerizing and curing the polymerizable composition by heating after winding of the superconducting wire 32 is completed.

Although the resin-impregnated superconducting coil 10 according to the present embodiment can have any specifications, for example, the inner size can be in the range of 30 to 400 mm, the outer size can be in the range of 100 to 1000 mm, and the number of turns can be in the range of 100 to 5000 turns.

The resin-impregnated superconducting coil 10 according to the present embodiment comprises a norbornene-based resin prepared through bulk polymerization of the above-mentioned polymerizable composition according to the present invention. The norbornene-based resin prepared from the polymerizable composition according to the present invention has high durability under the above-mentioned high-dose environment. For this reason, the resin-impregnated superconducting coil produced using the polymerizable composition according to the present invention can be stably used for a long time under the high-dose environment.

The norbornene-based resin prepared from the polymerizable composition according to the present invention has relatively low adhesive strength to the superconducting wire 32 constituting the resin-impregnated superconducting coil 10 while having excellent mechanical properties even at a cryogenic temperature. For this reason, even when thermal shrinkage of the norbornene-based resin occurs during cooling, breakage of the resin-impregnated superconducting coil 10 due to tensile stress caused by the thermal shrinkage can be suppressed, and thus occurrence of a quench can be effectively suppressed.

Furthermore, the norbornene-based resin prepared from the polymerizable composition according to the present invention comprises the rare earth element-containing particles. Because such rare earth element-containing particles have excellent thermal storage properties, the norbornene-based resin prepared from the polymerizable composition according to the present invention can have a high specific heat at a cryogenic temperature, and thus can effectively suppress occurrence of quenching. Furthermore, due to the properties of the rare earth element-containing particles, the norbornene-based resin can absorb the generated heat and relax an increase in temperature, and thus occurrence of thermal runaway in the resin-impregnated superconducting coil can be effectively suppressed. Specifically, the norbornene-based resin prepared from the polymerizable composition according to the present invention can have high specific heat at a temperature of 4 K, preferably 3.0 J/K/kg or more, more preferably 5.0 J/K/kg or more, still more preferably 10.0 J/K/kg or more, particularly preferably 15.0 J/K/kg or more. The upper limit of the specific heat at a temperature of 4 K of the norbornene-based resin is not particularly limited, and is 100 J/K/kg or less, for example.

Owing to such properties, the resin-impregnated superconducting coil 10 according to the present embodiment can be suitably used as a resin-impregnated superconducting coil under a high-dose environment where the radiation dose per 100,000 hours falls within the above ranges. Specifically, the resin-impregnated superconducting coil 10 according to the present embodiment can be suitably used as a superconducting coil for generating a magnetic field in a particle accelerator such as SuperKEKB.

### EXAMPLES

Hereinafter, the present invention will be described based on Examples, but these Examples should not be construed as limitations to the present invention. To be noted, "parts" and "%" are mass-based unless otherwise specified.

### <Bending strength>

Norbornene-based resins before and after irradiation with a γ-ray were measured for bending strength at 23°C according to JIS K7017.

### <Example 1>

100 Parts of an RIM monomer (available from ZEON Corporation), 500 parts of Gd₂O₃ particles having a number-based modal particle size measured by a light scattering method (laser diffraction/scattering method) of 0.9 µm, 1.5 parts of a coupling agent 1 (vinyltrimethoxysilane, available from Shin-Etsu Chemical Co., Ltd.), 3 parts of a coupling agent 2 (bicycloheptenylethyltriethoxysilane, available from Shin-Etsu Chemical Co., Ltd.), and 3 parts of a dispersant (product name "RHEODOL SP-030V", isopropyltrisstearoyl titanate, available from Kao Corporation) were mixed to prepare a preparative liquid formulation (i). The RIM monomer consists of 90 parts of dicyclopentadiene and 10 parts of tricyclopentadiene as norbornene-based monomers.

0.3 Parts of a ruthenium catalyst represented by General Formula (7) as a metathesis polymerization catalyst, 30 parts of 2,6-di-t-butyl-p-cresol (BHT, antioxidant), and 30 parts of triphenylphosphine were dissolved in 39.7 parts of cyclopentanone to prepare a preparative liquid formulation (ii). 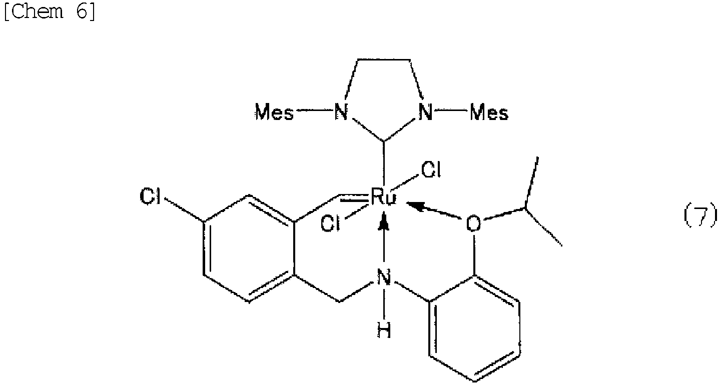 (where Mes represents a mesityl group).

The mold used was a mold for flat plate molded article reaction injection molding formed of two stainless steel plates and having an inner space measuring 245 mm in length × 210 mm in width × 4 mm in thickness. The mold for reaction injection molding has a structure in which a reaction solution injection hole is provided in the lowest portion of one of the stainless steel plates.

The preparative liquid formulations (i) and (ii) prepared above were mixed in a mass ratio (i): (ii) = 600:1, followed by defoaming in vacuum. Thereafter, the mixture was injected into the mold for reaction injection molding through the reaction solution injection hole. The mold was heated for 30 minutes in an oven heated to 40°C, and then was heated at 120°C for 60 minutes to prepare a polymerized and cured norbornene-based resin. The resulting norbornene-based resin (before irradiation with the γ-ray) was measured for bending strength according to the above-mentioned method. The result is shown in Table 1.

Two norbornene-based resins were prepared as above. Using a γ-ray irradiation facility (Cobalt 60 Irradiation Facility of Takasaki Quantum Technology Infrastructure Laboratory, National Institutes for Quantum Science and Technology, the radiation dose per 100,000 hours: 1 MGy or more), one of the resulting norbornene-based resins was irradiated with about 3 to 4 MGy of the γ-ray, and the other was irradiated with about 5 MGy of the γ-ray, giving the norbornene-based resins after irradiation with the γ-ray. Specific doses of the γ-ray are shown in Table 1. The norbornene-based resins after the irradiation with the γ-ray were measured for bending strength according to the above-mentioned method. The results are shown in Table 1.

### <Example 2>

Norbornene-based resins were prepared in the same manner as in Example 1 except that the Gd₂O₃ particles were replaced by Gd₂O₂S particles having a number-based modal particle size of 1.1 µm measured by a light scattering method (laser diffraction/scattering method), and were tested as in Example 1. The results are shown in Table 1.

### <Example 3>

Norbornene-based resins were prepared in in the same manner as in Example 1 except that the Gd₂O₃ particles were replaced by HoCu₂ particles having a number-based modal particle size of 1.1 µm measured by the light scattering method (laser diffraction/scattering method), and were tested as in Example 1. The results are shown in Table 1.

The polymerizable compositions prepared in Examples 1 to 3 had low viscosity, and demonstrated sufficient impregnation properties to the superconducting coil when used in the superconducting coil, and thus can be suitably used in production of the resin-impregnated superconducting coil.

### [Table 1]

**Table 1**

| Example 1 | | | Example 2 | | | Example 3 | | |
|---|---|---|---|---|---|---|---|---|
| Gd₂O₃ particles | | | Gd₂O₂S particles | | | HoCu₂ particles | | |
| Radiation dose (MGy) | Bending strength (MPa) | Increase ratio (%) | Radiation dose (MGy) | Bending strength (MPa) | Increase ratio (%) | Radiation dose (MGy) | Bending strength (MPa) | Increase ratio (%) |
| 0 | 72.3 | - | 0 | 33.0 | - | 0 | 10.7 | - |
| 3.42 | 73.1 | 1 | 3.33 | 50.2 | 52 | 3.38 | 52.6 | 389 |
| 5.18 | 91.3 | 26 | 5.13 | 60.2 | 83 | 4.88 | 42.4 | 294 |

Table 1 clearly shows that the polymerizable compositions in Examples 1 to 3 provided norbornene-based resins having sufficient bending strength when irradiated with about 3 to 4 MGy of the γ-ray and irradiated with about 5 MGy of the γ-ray. Thus, it can be verified that the polymerizable composition comprising the norbornene-based monomer, the rare earth element-containing particles, and the metathesis polymerization catalyst enabled production of the resin-impregnated superconducting coil having high durability under a high-dose environment (under a high-dose environment where the radiation dose per 100,000 hours is 1 MGy or more).

Furthermore, the resulting norbornene-based resins had excellent mechanical properties even at a cryogenic temperature, and had relatively low adhesive strength to the material of the coil constituting the superconducting coil. For this reason, breakage of the superconducting coil due to tensile stress caused by thermal shrinkage can be suppressed even when thermal shrinkage of the norbornene-based resin occurs during cooling of the superconducting coil, and thus occurrence of a quench caused by breakage of the superconducting coil can be effectively suppressed.

In addition, the norbornene-based resin in Example 1 was evaluated for the specific heat at a temperature of 4 K using a physical properties evaluation system (product name "PPMS", available from Quantum Design Japan, Inc.) as a measurement apparatus. The result showed that the norbornene-based resin in Example 1 had a high specific heat at a temperature of 4 K, which was 20 J/K/kg. From this fact, due to its excellent thermal storage properties, the norbornene-based resin in Example 1, when used in a superconducting coil, can effectively suppress occurrence of a quench. Furthermore, the norbornene-based resin in Example 1 can absorb the generated heat to relax an increase in temperature, and thus can effectively suppress occurrence of thermal runaway. For this reason, a resin-impregnated superconducting coil having high conduction stability and high reliability is obtained. The norbornene-based resin in Example 1 also has excellent heat dissipating properties, and can provide a resin-impregnated superconducting coil which can be cooled in a short time.

### REFERENCE SIGNS LIST

- 10: resin-impregnated superconducting coil
- 20: winding frame
- 30: coil body
- 32: superconducting wire
- 34: wire protective layer

## Claims

1. A polymerizable composition for a resin-impregnated superconducting coil for use under a high-dose environment where the radiation dose per 100,000 hours is 1 MGy or more,
the polymerizable composition comprising a norbornene-based monomer, rare earth element-containing particles, and a metathesis polymerization catalyst.

2. The polymerizable composition according to claim 1, wherein the rare earth element-containing particles contain at least one rare earth element selected from the group consisting of cerium, praseodymium, gadolinium, dysprosium, holmium, and erbium.

3. The polymerizable composition according to claim 1 or 2, wherein the content of the rare earth element-containing particles is 4 to 90% by mass.

4. The polymerizable composition according to any one of claims 1 to 3, wherein the norbornene-based monomer contains 50% by mass or more of dicyclopentadiene.

5. The polymerizable composition according to any one of claims 1 to 4, wherein the norbornene-based monomer contains a tricyclic compound and a pentacyclic compound.

6. The polymerizable composition according to any one of claims 1 to 5, further comprising a silane coupling agent.

7. The polymerizable composition according to any one of claims 1 to 6,
wherein the polymerizable composition is in the form of two or more preparative liquid formulations each of which alone is not capable of polymerization, and can be formed by combining the preparative liquid formulations.

8. The polymerizable composition according to any one of claims 1 to 7, wherein the resin-impregnated superconducting coil is a superconducting coil for generating a magnetic field in a particle accelerator.

9. A resin-impregnated superconducting coil for use under a high-dose environment where the radiation dose per 100,000 hours is 1 MGy or more,
the resin-impregnated superconducting coil being prepared by impregnating a superconducting coil with a norbornene-based resin prepared through bulk polymerization of the polymerizable composition according to any one of claims 1 to 8.

10. The resin-impregnated superconducting coil according to claim 9, wherein the norbornene-based resin has a specific heat at a temperature of 4 K of 3.0 J/K/kg or more.
